# EUROPEAN PATENT SPECIFICATION

(11) **EP 0 544 040 B1**
(45) Date of publication and mention of the grant of the patent: **11.09.1996**
(21) Application number: 91310969.0
(22) Date of filing: 28.11.1991
(51) Int. Cl.: B05D 7/14, C23C 22/74

(54) **Protection coating for titanium article**
Schutzbeschichtung für Titangegenstände
Revêtement de protection pour des articles en titane

(43) Date of publication of application: 02.06.1993
(73) Proprietor: SERMATECH INTERNATIONAL INC., Limerick, PA 19486 (US)
(72) Inventor: Mosser, Mark F., Sellersville, Pennsylvania (US); McMordie, Bruce G., Perkasie, Pennsylvania 18944 (US); Eddinger, Kevin B., Gilbertsville, Pennsylvania 19525 (US)
(74) Representative: Wharton, Peter Robert

(56) References cited:
- EP-A- 0 291 260
- FR-A- 1 266 530
- FR-A- 2 185 035
- GB-A- 1 019 202
- GB-A- 1 032 833
- US-A- 3 053 693
- US-A- 3 697 309
- WORLD PATENTS INDEX LATEST, week 18, 1989, AN=89-134374, Derwent Publications Ltd, London, GB; & JP-A-1 079 269 (SEKISUI CHEM. IND. K.K.) 24-03-1989
- WORLD PATENTS INDEX LATEST, week 09, 1988, AN=88-059525, Derwent Publications Ltd, London, GB; & JP-A-63 013 741 (DAIKO KOHAN K.K.) 21-01-1988

## Description

### TECHNICAL FIELD

The present invention relates to coating compositions for protecting titanium or titanium alloys, the coated article, and the method of coating the article. More specifically, the present invention relates to coating compositions which are ideally suited for application to parts, such as aircraft and turbine engine parts, made from titanium and titanium alloys that are exposed to oils and hydraulic fluids at high temperatures.

### BACKGROUND ART

The use of titanium alloys in aerospace construction is of significant interest. Titanium alloys have superior strength-to-weight ratios. Densities range between 4.4 and 4.85 gm/cm³ and yield strengths from 172 MPa to 1,880 MPa for different titanium alloys. This combination of high strength and low density results in exceptionally favorable strength-to-weight ratios. These ratios are superior to almost all other metals in the range of temperatures reached in the compressors of aircraft gas turbines making the use of titanium very desirable for weight saving.

In addition to high strength-to-weight ratios, titanium alloys possess excellent erosion resistance, high heat transfer efficiency and good corrosion resistance in most environments. Like stainless steel, in the presence of air titanium alloys form a tightly adherent oxide scale that is self healing and severely reduces material loss due to erosion/corrosion.

In airframe/turbine engine applications, it is desirable to replace ferrous alloys including stainless steels, and some nickel based alloys with titanium alloys to save weight. Presently, titanium alloys account for 7% of the weight of airframe structures for commercial aircraft and 20-25% of weight in such structures used for military applications. Uses include bulkheads, air ducting, fairings, keels, and fuselage panels. In addition, casings and larger structures made by electron beam welding plates of various titanium alloys can be substituted for ferrous materials.

One obstacle to greater utilization of titanium within airframes is its reactivity with hot oils and hydraulic fluids. In aircraft, excess heat, age or catalytic reaction can cause lubricants and hydraulic fluids to decompose to acidic materials which quickly attack titanium structures. One major manufacturer of commercial aircraft has noted that phosphate ester based hydraulic fluid has little effect on most metals up to about 115°C (240°F), but that titanium alloys can be severely etched, pitted, and embrittled when exposed to such a fluid at temperatures above 132°C (270°F). This corrosion occurs on all of the titanium alloys that could be used in airframe construction. Similar effects are seen on corrosion-resistant steel, often known as CRES, at temperatures above 204°C (400°F). Temperatures greater than 132°C can be generated in a variety of airframe locations - for example, in braking systems and in/near engines and support pylons.

Of the hydraulic fluids and oils most commonly used, phosphate ester type synthetic hydraulic fluid exhibits the most rapid attack on airframe materials. This fluid is used in aircraft because it is fire resistant, e.g., it has a high autoignition temperature and shows little tendency to propagate a flame. In addition to attacking titanium (and steels), it strips most finishes from metals and attacks other organic polymer structures. This phosphate ester hydraulic fluid typically contains dibutyl phenyl phosphate and tributyl phosphate. Typical hydraulic fluids of this type are Skydrol 500B and Skydrol LD manufactured by Monsanto Chemical Company.

When this fluid drips on titanium alloys that are operating at a temperature greater than 132°C (270°F), black decomposition products accumulate which contain acidic products such as acid phosphates which rapidly attack the titanium structure.

In the past, use of titanium structures in any area exposed to such hydraulic fluid was forbidden since there was no known way of controlling the attack of the hydraulic fluid on the hot component. The temperature of exposure can be as high as 260°C (500°F) and can be produced by cool hydraulic fluid dripping on a hot component or hot hydraulic fluid dripping on a cool component. Because the attack produces embrittlement and pitting, protection must be total since embrittlement and pitting both lead to cracks and catastrophic failure.

Applicant has been quite active in developing and patenting various coating and bonding compositions which are highly suitable for coating various surfaces, particularly metal, to impart protective or other characteristics thereto or which may be used as compositions for bonding two surfaces together. Examples of these compositions are disclosed in the U.S. Patents 3,248,251 to Allen, issued April 26, 1966, 4,537,632 issued August 27, 1985, and 4,606,967 issued August 19, 1986, both to Mosser, and U.S. Patents 4,617,056, issued October 15, 1986, 4,659,613, issued April 21, 1987, and 4,724,172, issued February 9, 1988, all to Mosser and McMordie. All of the aforementioned patents are assigned to the assignee of the present invention. However, none of the aforementioned patents or other prior art known to applicant addresses the problem inherent in coatings of titanium structures which are exposed to hydraulic fluids at extremely high temperatures. Further, neither applicant nor others skilled in the art have previously been able to provide coatings for controlling the attack of the hydraulic fluid on hot components made from titanium or titanium alloys.

Applicant herein provides a coating, a method of coating an article, and a coated article, all related to titanium and titanium alloys as substrates, which now allows such coated substrates to be used in what was previously forbidden in environments.

### SUMMARY OF THE INVENTION

In accordance with the present invention there is provided a coated article comprising: a single substrate of titanium or a titanium alloy; an outer coating consisting essentially of a polyphenylene sulfide (PPS) resin for protecting said substrate from chemical degradation and maintaining stability during exposure to temperatures of at least 260°C; and an adhesion primer layer disposed between said substrate and said outer coating, said adhesion primer layer including an inorganic binder phase containing a reactive metal powder for increasing adhesion to said titanium and titanium alloys and thermal plastic resin particles for increasing adhesion to said outer coating, said thermal plastic resin particles consisting of essentially polyphenylene sulfide resin; and a sublayer between said substrate and said primer layer, said sublayer selected from aluminum, aluminum alloy and aluminum ceramic.

The present invention further provides a method of making a coated article including the steps of: forming a substrate from titanium or titanium alloys, and adhering an outer coating of thermoplastic PPS resin capable of protecting the substrate against chemical attack and temperature of at least as high as 260°C by applying an adhesion primer layer over a sublayer selected from aluminum, aluminum alloy and aluminum ceramic on the substrate, the primer layer including an inorganic binder phase increasing adhesion to the substrate and the thermoplastic resin in particulate form increasing adhesion to the outer coating.

### DETAILED DESCRIPTION OF THE INVENTION

A coated article made in accordance with the present invention includes a substrate consisting essentially of titanium or titanium alloy. Examples of typical titanium alloys are described in AMS Specification 4911 (6% aluminum, 4% vanadium), AMS Specification 4919 (6% aluminum, 2% tin, 4% zironium, 2% molybdenum). Alloys are described further in U.S. Military Specification MIL-T-9046. The substrate can be in the form of an airframe component, such as a pylon, that is used for securing a jet engine to an aircraft wing or the like. As discussed above, these pylons are commonly exposed to hot hydraulic fluid dripping on a cool substrate or alternatively, the exposure can be to cool fluid dripping on a high temperature substrate.

The coated article includes an outer coating of thermoplastic resin for protecting the substrate from chemical degradation and maintaining stability during exposure to temperatures over 260°C (500°F). The thermoplastic resin is, polyphenylene sulfide (PPS).

This resin is useful because it is generally considered to be a resistant to most chemicals. It is useful at elevated temperatures, for example, greater than 120°C (250°F) and is stable during prolonged exposure to temperatures over 260°C (500°F). Additionally, the resin is thermoplastic. Accordingly, it melts and flows thereby forming films having significant cohesive strength. The resin is not attacked by hydraulic fluids or the decomposition products of hydraulic fluids.

Prior to the development of the present invention, it has been demonstrated that although the coatings listed above and coatings similar thereto can be applied to substrates like titanium, they suffer from poor adhesion. In addition, in areas where such films have imperfections, such as pin holes, there is ready access to the substrate. At these pin holes, rapid localized attack can be initiated.

The present invention addresses the aforementioned problems by providing an adhesion primer layer disposed between the substrate and the outer coating. The adhesion primer layer includes an inorganic binder phase for increasing adhesion to the titanium and titanium alloys and related metals. The adhesion primer layer further includes thermoplastic PPS resin in particulate form for increasing adhesion to the outer coating. In other words, applicant has found that adhesion of the protective thermoplastic films forming the outer layer is greatly improved if the film is applied on the primer layer which contains an inorganic binder phase and the high temperature thermoplastic resin in particulate form.

Although applicant has utilized similar coatings in other environments, applicant has discovered, as claimed herein, that such coatings are useful in combination with substrates made from titanium, or titanium alloys for the protection of these metals in the aggressive environment set forth above. Moreover, applicant has discovered these coating compositions to include an oil and hydraulic fluid decomposition product protection component for protecting the titanium or titanium alloy from the high temperature acids produced by the decomposition of oils and hydraulic fluids.

Generally, the primer layer includes a cured binder or matrix phase prepared by thermally curing a primer slurry consisting essentially of an aqueous solution of a combination of inorganic compounds from the group consisting of phosphoric acid, chromic acid, molybdic acid and metal salts of these acids. Preferred solutions contain phosphate anion and chromate (or dichromat) and/or molybdate anions. such coating composition binders are disclosed in the U.S. Patents 3,248,251 to Allen, 3,869,293 to Brumbaugh, and 4,537,632 to Mosser.

The primer layer can include certain pigments for further increasing the adhesion of the outer coating thereto. Specifically, pulverulent aluminum is beneficial in such primer layers in that the pulverulent aluminum bonds tenaciously to all of the thermoplastic resins listed above. Additionally, aluminum metal does not oxidize during the cure cycle required for the resin in the outer coating and further improves adhesion. An additional benefit of the pigment is that if the outer coating has pin holes or other imperfections, the aluminum powder in the primer layer can react with the acid phosphates or other acidic compounds produced by decomposing hydraulic or other fluid thereby neutralizing the effects of the acid and preventing corrosion.

Preferably, the aluminum powder consists essentially of atomized aluminum spheroids. such particles are disclosed in the U.S. Patent 4,537,632 to Mosser, assigned to the assignee of the present invention.

Although aluminum powder is the preferred pigment, aluminum alloy or aluminum ceramic particles can be incorporated into the binder. Furthermore, other additives, such as pigments can be included in the film.

The primer layer is applied over a sublayer containing aluminum or aluminum alloys. this sublayer can be in the form of aluminum powder thermally sprayed using powder plasma, arc wire or similar techniques. Alternatively, the aluminum layer can be applied by physical vapor deposition, specifically ion vapor deposition. The sublayer may also consist of aluminum/ceramic coatings such as those described in the U.S. Patents 3,248,251 to Allen, 4,537,632 and 4,606,967 to Mosser, and 4,617,056, 4,659,613 and 4,724,172 to Mosser and McMordie. These coatings are of particular significance because of their exceptionally high bond strength, high temperature stability, and ease of application to a wide variety of structures.

The aluminum sublayer insures that if the barrier polymer outer coating or primer layer fails in service, the substrate will still be protected from the hydraulic fluid by a layer capable of reacting with the fluid and neutralizing its effects. Although it is possible that this layer may add undesired weight to the final coated product, the ambient condition of the coated article may be such that the benefit of the additional layer providing protection to the substrate will out-weigh the cost of the additional weight.

As stated above, the primer layer includes a high temperature thermoplastic resin in particulate form and a bonding agent. Optimally, other pigments, particularly metal powders, can be added to this layer. The bonding agent may be a metal powder and the metal powder/thermoplastic resin may be applied by thermal spray techniques. Although different compositions are described in the U.S. Patent 3,723,165 to Longo et al, the Longo patent does disclose that such composite materials can be thermally sprayed onto a substrate surface. In addition to this thermal spray technique, the resin or resin/metal pigment mixtures can be compounded in inorganic binders such as acid phosphates, chromate/phosphates, or inorganic silicates, as disclosed in the above cited Allen patent.

With regard to the thermoplastic resin in particulate form, the size of the resin particles can vary from colloidal to about 150 microns (100 mesh) with typical sizes being between 5 microns to 100 microns. The primer layer composition is designed such that after application to the substrate surface and thermal cure, if required, the resin particles are present on the surface of the primer layer. This is critical because these particles are useful in bonding the outer coating film to the primer layer.

Thermal cure of the inorganic primers is usually carried out at temperatures between 232°C (450°F) and 371°C (700°F) to cure the inorganic binder portion of the primer layer and to sinter the particulate resin portion.

The outer coating includes the same resin as the primer resin, polyphenylene sulphide. The top coat film forming the outer coating is heated at least to 360°C (680°F) to partially melt the particles of resin in the primer as well as the resin in the outer coating. In this manner, the resins are bonded thereby bonding together the two layers.

The outer coating can be prepared as a slurry of solvent carriers and finely divided resin or it may be preformed film. Solvent carriers used will vary with the resin selected. PPS resin is usually applied from a water dispersion. Additionally, both the outer coating and primer layer may include other components, such as surfactants, to improve the fluid characteristics of the coating to be compatible and form desirable films over particular substrates.

An alternative method of applying the outer coating is by the coalescence of electrostatically deposited resin powder to form a film during subsequent thermal treatment. The film itself would then be applied to the primer layer and thermally cured therewith to bond the two layers together.

### EXPERIMENTAL EXAMPLES

In general, evaluation of the coating systems used and made in accordance with the present invention to meet end user requirements is done by heating a horizontal titanium alloy panel to a suitable test temperature, as high as 260°C (500°f). Then, hydraulic fluid is dripped onto the panel at a slow constant rate. Decomposition occurs and a black char-like substance remains. Every 24 hours, the specimen is cooled and the char scraped off with a blunt wood scraper. After clean up, the test is continued until four 24 hour cycles have been completed. Finally, the coating is removed entirely and any weight changes noted in addition to any erosion, pits, or other indications of attack.

Quantitative evaluation may include measurement of yield strength changes or fatigue testing may be undertaken to insure that there have been no undesirable effects on the substrate.

Although other test methods are possible, the one described above stimulates a typical airframe application where leaking hydraulic line drips fluid on a hot airframe component.

### EXAMPLE I

A primer was prepared by manufacturing the following binder A (taken from U.S. Patent to Allen discussed above, example 7).

| Binder A | |
|---|---|
| Deionized Water | 800 milliliters |
| Phosphoric Acid (85%) | 220 milliliters |
| Chromic Acid | 92 grams |
| Magnesium Oxide | 152 grams |

| Primer | |
|---|---|
| Binder A | 1750 milliliters |
| Deionized Water | 1750 milliliters |
| Aluminum Powder, air atomized, 5.5 um ave. particle size | 1225 grams |
| Polyphenylene Sulfide resin powder (Ryton V-1 grade) (Phillips Petroleum Co.) | 1435 grams |
| Surfactant, Triton X-100 (Rohm and Haas Co.) | 10 grams |

The primer was mixed and screened through a 100 mesh (150 µm) screen. The primer was spray applied to a titanium alloy panel that had been blasted with 100 mesh (150 µm) aluminum oxide. The primer was cured at 343°C (650°F) for 30 minutes, then cooled.

A polyphenylene sulfide topcoat was prepared as follows:

| | |
|---|---|
| Deionized water | 1900 milliliters |
| Glycerol | 1667 milliliters |
| Surfactant, Triton X-100 (Rohm & Haas Co.) | 266 milliliters |
| Polyphenylene Sulfide Resin (Ryton V-1 Grade) | 1333 grams |
| Titanium Dioxide rutile pigment grade | 320 grams |

The ingredients were added in order, stirred, and then ball milled for 24 hours. this topcoat was spray applied over the cured primer layer and then cured at 371°C (700°F) for 30 minutes. A second coat was applied and cured in the same way. Total coating thickness was 90 µm (0.0035 inches).

Primed and topcoated panels titanium alloy panels were exposed to the dripping hydraulic fluid (Skydrol) test for 96 hours at 232°C (450°F) and exhibited no weight change or evidence of pitting. Bare titanium alloy panels were severely eroded by the same exposure.

### EXAMPLE II

Sheet titanium alloy panels (AMS 4911) were solvent degreased, grit blasted with 100 mesh (150 µm) aluminum oxide, then coated with an aluminum coating described in U.S. Patent 4,724,172 example 7, to Mosser and McMordie, dried at 80°C (176°F) for 30 minutes, then cured at 343°C (650°F) for 30 minutes. After cooling to ambient temperature, a second coat was applied, dried, and cured. A total of 125 µm (0.0049 inches) average coating thickness was applied.

This aluminum/ceramic layer was primed and topcoated with the coating primer and topcoat described in Example I. When tested per the procedure described in Example I, it showed corrosion resistance at least equivalent to that of the primed and topcoated panels described in Example I.

The above examples demonstrate the ability of the present invention to provide a coated article with means for protecting titanium or titanium alloy substrate from acids produced by decomposition products of oils and hydraulic fluids at temperatures up to 260°C (500°F).

## Claims

1. A coated article comprising: a single substrate of titanium or a titanium alloy; an outer coating consisting essentially of a polyphenylene sulfide (PPS) resin for protecting said substrate from chemical degradation and maintaining stability during exposure to temperatures of at least 260°C; and an adhesion primer layer disposed between said substrate and said outer coating, said adhesion primer layer including an inorganic binder phase containing a reactive metal powder for increasing adhesion to said titanium and titanium alloys and thermal plastic resin particles for increasing adhesion to said outer coating, said thermal plastic resin particles consisting of essentially polyphenylene sulfide resin; and a sublayer between said substrate and said primer layer, said sublayer selected from aluminum, aluminum alloy and aluminum ceramic.

2. An article as set forth in claim 1 wherein said primer layer includes as pigment means for further increasing the adhesion of said outer coating thereto pulverulent aluminum powder.

3. An article as set forth in claim 2 wherein said aluminum powder consists essentially of atomized aluminum spheroids.

4. An article as set forth in claims 1 to 3 wherein said inorganic binder phase consists essentially of an aqueous solution of phosphate ions and ions of the group of chromate of molybdate ions.

5. An article as set forth in claims 1 to 4 wherein said primer layer includes an interface surface against said topcoat, at least some of said resin particle being disposed at said interface.

6. A method of making c coated article including the steps of: forming a substrate from titanium or titanium alloys, and adhering an outer coating of thermoplastic PPS resin capable of protecting the substrate against chemical attack and temperature of at least as high as 260°C by applying an adhesion primer layer over a sublayer selected from aluminum, aluminum alloy and aluminum ceramic on the substrate, the primer layer including an inorganic binder phase increasing adhesion to the substrate and the thermoplastic resin in particulate form increasing adhesion to the outer coating.

7. A method as set forth in claim 6 further including the step of applying an aluminum coating layer directly over the substrate and applying the primer layer over the substrate and applying the primer layer over the aluminum coating layer.

8. A method as set forth in claim 6 further including the step of thermally curing the inorganic binder phase of the primer layer and sintering the thermoplastic resin by exposing the article to temperatures of between 232°C and 371°C for between 0.5 and 10 hours.

9. A coating for protecting substrates of titanium or a titanium alloy, comprising: a protective layer consisting essentially of a polyphenylene sulfide resin for protecting said substrate from chemical degradation and maintaining stability during exposure to temperatures of at least 260°C; an adhesion primer layer including an inorganic binder phase containing a reactive metal powder for increasing adhesion to said titanium and titanium alloys and thermal plastic resin particles for increasing adhesion to said outer coating, said thermal plastic resin particles consisting of essentially polyphenylene sulfide resin; and a sublayer selected from aluminum, aluminum alloy and aluminum ceramic.

## Patentansprüche

1. Beschichteter Gegenstand, der folgendes aufweist: ein einzelnes Substrat aus Titan oder einer Titanlegierung; eine äußere Beschichtung, die im wesentlichen aus einem Polyphenylensulfid (PPS)-Harz zum Schutz des substrats vor chemischem Abbau und zur Beibehaltung der Stabilität während Temperaturbelastungen von wenigstens 260 °C besteht; und eine Haftgrundierungsschicht, die zwischen dem Substrat und der äußeren Beschichtung angeordnet ist, wobei die Haftgrundierungsschicht eine anorganische Bindemittelphase enthält, die ein reaktives Metallpulver zur Erhöhung der Haftung an dem Titan und den Titanlegierungen sowie Thermo-Kunstharzpartikeln zur Erhöhung der Haftung an der äußeren Beschichtung enthält, wobei die Thermo-Kunstharzpartikel im wesentlichen aus Polyphenylensulfid-Harz bestehen; und eine Unterschicht zwischen dem Substrat und der Grundierungsschicht, wobei die Unterschicht ausgewählt ist aus Aluminium, Aluminiumlegierung und Aluminiumkeramik.

2. Gegenstand nach Anspruch 1,
bei dem die Grundierungsschicht als Pigmentmittel pulverförmiges Aluminiumpulver zur weiteren Erhöhung der Haftung der äußeren Beschichtung enthält.

3. Gegenstand nach Anspruch 2,
bei dem das Aluminiumpulver im wesentlichen aus atomisierten Aluminiumsphäroiden besteht.

4. Gegenstand nach den Ansprüchen 1 bis 3,
bei dem die anorganische Bindemittelphase im wesentlichen aus einer wässrigen Lösung aus Phosphationen und Ionen der Gruppe der Chromate von Molybdationen besteht.

5. Gegenstand nach den Ansprüchen 1 bis 4,
bei dem die Grundierungsschicht eine Grenzfläche gegen die Oberschicht enthält, wobei wenigstens einige der Harzpartikel an der Grenzschicht angeordnet sind.

6. Verfahren zur Herstellung eines beschichteten Gegenstandes, das die folgenden Schritte enthält:
Bildung eines Substrats aus Titan oder Titanlegierungen und Befestigen einer äußeren Beschichtung aus thermoplastischem PPS-Harz daran, die in der Lage ist, das Substrat gegen chemische Angriffe und Temperaturen von wenigstens 260 °C zu schützen durch Anbringen einer Grundierungsschicht über einer Unterschicht, die aus Aluminium, Aluminiumlegierung und Aluminiumkeramik ausgewählt ist, wobei die Grundierungsschicht eine anorganische Bindemittelphase enthält, die die Haftung an dem Substrat erhöht, und wobei das thermoplastischen Harz in Teilchenform die Haftung an der äußeren Beschichtung erhöht.

7. Verfahren, nach Anspruch 6,
das weiter den Schritt des Aufbringens einer Aluminium-Deckschicht direkt über dem Substrat und des Aufbringens der Grundierungsschicht über dem Substrat und des Aufbringens der Grundierungsschicht über der Aluminum-Deckschicht enthält.

8. Verfahren, nach Anspruch 6,
das weiter den Schritt der thermischen Härtung der anorganischen Bindemittelphase der Grundierungsschicht und des Sinterns des thermoplastischen Harzes enthält, indem man den Gegenstand einer Temperatur zwischen 232 °C und 371 °C für eine Dauer zwischen 0,5 und 10 stunden aussetzt.

9. Beschichtung zum Schutz von Substratien aus Titan oder einer Titanlegierung, die folgendes aufweist:
eine Scnutzschicht, die im wesentlichen aus einem Polyphenylensulfid-Harz zum Schutz des Substrats vor chemischem Abbau und Beibehaltung der Stabilität während Temperaturbelastungen von wenigstens 260 °C besteht;
eine Haftgrundierungsschicht, die eine anorganische Bindemittelphase enthält, die ein reaktives Metallpulver zur Erhöhung der Haftung an dem Titan und den Titanlegierungen und Thermo-Kunstharzpartikeln zur Erhöhung der Haftung an der äußeren Beschichtung enthält, wobei die Thermo-Kunstharzpartikel im wesentlichen aus Polyphenylensulfid-Harz bestehen; und eine Unterschicht, die ausgewählt ist aus Aluminium, Aluminiumlegierung und Aluminiumkeramik.

## Revendications

1. Article revêtu comprenant : un substrat unique composé de titane ou d'un alliage de titane ; un revêtement extérieur composé essentiellement de résine de polyphénylène sulfureux (PPS) permettant de protéger ledit substrat des dégradations chimiques et de maintenir la stabilité lorsque celui-ci est exposé à des températures d'au moins 260°C ; et une couche primaire adhésive disposée entre ledit substrat et ledit revêtement extérieur, ladite couche primaire adhésive comportant une phase liante inorganique contenant une poudre de métal réactive permettant d'augmenter l'adhérence auxdits titane et alliages de titane et des particules de résine thermoplastique permettant d'augmenter l'adhérence audit revêtement extérieur, lesdites particules de résine thermoplastique étant composées essentiellement de résine de polyphénylène sulfureux ; et une sous-couche entre ledit substrat et ladite couche primaire, ladite sous-couche étant choisie parmi l'aluminium, un alliage d'aluminium ou une céramique d'aluminium.

2. Article selon la revendication 1, dans lequel ladite couche primaire comporte de la poudre d'aluminium pulvérulent comme moyen de pigmentation permettant d'augmenter davantage l'adhérence dudit revêtement extérieur à celle-ci.

3. Article selon la revendication 2, dans lequel ladite poudre d'aluminium est composée essentiellement de sphéroïdes en aluminium atomisé.

4. Article selon les revendications 1 à 3, dans lequel ladite phase liante inorganique est composée essentiellement d'une solution aqueuse d'ions phosphatés et d'ions au chromate ou au molybdate.

5. Article selon les revendications 1 à 4, dans lequel ladite couche primaire comporte une surface d'interface contre ladite couche supérieure, au moins une partie desdites particules de résine étant disposée au niveau de ladite interface.

6. Procédé permettant de réaliser un article revêtu comportant les étapes consistant à : former un substrat à partir de titane ou d'alliages de titane, et faire adhérer un revêtement extérieur en résine PPS thermoplastique capable de protéger le substrat contre l'attaque chimique et des températures d'au moins 260°C en appliquant une couche primaire adhésive par dessus une sous-couche choisie parmi l'aluminium, un alliage d'aluminium ou une céramique d'aluminium sur le substrat, la couche primaire comportant une phase liante inorganique augmentant l'adhérence au substrat et la résine thermoplastique sous forme de particules augmentant l'adhérence au revêtement extérieur.

7. Procédé selon la revendication 6, comportant en outre l'étape consistant à appliquer une couche de revêtement d'aluminium directement sur le substrat, appliquer la couche primaire sur le substrat, et appliquer la couche primaire sur la couche de revêtement d'aluminium.

8. Procédé selon la revendication 6, comportant en outre l'étape consistant à durcir à chaud la phase liante inorganique de la couche primaire et fritter la résine thermoplastique en exposant l'article à des températures comprises entre 232°C et 371°C pendant une durée comprise entre 30 minutes et 10 heures.

9. Revêtement permettant de protéger des substrats en titane ou en alliage de titane, comprenant : une couche protectrice composée essentiellement de résine de polyphénylène sulfureux permettant de protéger ledit substrat des dégradations chimiques et de maintenir la stabilité lorsque celui-ci est exposé à des températures d'au moins 260°C ; une couche primaire adhésive comportant une phase liante inorganique contenant une poudre de métal réactive permettant d'augmenter l'adhérence auxdits titane et alliages de titane et des particules de résine thermoplastique permettant d'augmenter l'adhérence audit revêtement extérieur, lesdites particules de résine plastique thermique étant composées essentiellement de résine de polyphénylène sulfureux ; et une sous-couche choisie parmi l'aluminium, un alliage d'aluminium ou une céramique d'aluminium.
